# FASCICULE DE BREVET EUROPEEN

(11) **EP 0 426 541 B1**
(45) Date de publication et mention de la délivrance du brevet: **12.02.1997**
(21) Numéro de dépôt: 90403024.4
(22) Date de dépôt: 26.10.1990
(51) Int. Cl.: G06K 19/06, G07F 7/08

(54) **Procédé de protection contre l'utilisation frauduleuse de cartes à microprocesseur, et dispositif de mise en oeuvre**
Verfahren zum Schutz gegen betrügerischen Gebrauch einer Mikroprozessor-Karte und Vorrichtung zur Durchführung
Method of protection against fraudulent use of a microprocessor card and device for its application

(30) Priorité: 03.11.1989 FR 8914414
(43) Date de publication de la demande: 08.05.1991
(73) Titulaire: LABORATOIRE EUROPEEN DE RECHERCHES ELECTRONIQUES AVANCEES, 92400 Courbevoie (FR)
(72) Inventeur: Diehl, Eric, F-92045 Paris la Défense (FR); Hamon, Joel, F-92045 Paris la Défense (FR); Leduc, Michel, F-92045 Paris la Défense (FR)
(74) Mandataire: Ruellan-Lemonnier, Brigitte

(56) Documents cités:
- WO-A-86/04170
- FR-A- 2 534 712
- US-A- 4 367 402

## Description

La présente invention se rapporte à un procédé de protection contre l'utilisation frauduleuse de cartes à microprocesseur, et à un dispositif de mise en oeuvre de ce procédé.

Certains réseaux de télévision à péage nécessitent l'utilisation de cartes à microprocesseur en tant que moyens de paiement pour les prestations servies.

Ces cartes peuvent être perdues par leurs possesseurs légitimes, ou elles peuvent leur être volées. En général, ces cartes ont une durée de validité de quelques mois, afin de limiter ces risques, ainsi que les risques de contrefaçon. Toutefois, en cas de perte ou de vol, la personne ayant récupéré une carte peut l'utiliser frauduleusement, et à la fin de la durée de validité peut, si elle a suffisamment de connaissances techniques, arriver à simuler le signal envoyé par le lecteur de cartes pour faire savoir à l'émetteur de programmes que la carte utilisée est encore valable.

Le document WO 86/04170 concerne un procédé consistant à écrire des informations de personnalisation dans chaque carte avant sa mise en service.

L'invention concerne un procédé de protection contre l'utilisation par des personnes non autorisées de cartes à microprocesseur dans un réseau de contrôle ou de distribution de biens ou de services comportant au moins un centre de gestion ou un émetteur et au moins un terminal caractérisé en ce qu'il consiste à attribuer une identité à chaque utilisateur et à la mémoriser dans les cartes qui lui sont délivrées,
à vérifier, lors du renouvellement d'une carte, que la nouvelle carte contient la même identité que la carte précédente, et
à n'autoriser l'utilisation de la nouvelle carte que si elle contient la même identité que la carte précédente.

Selon un mode de réalisation particulier, on réserve dans les cartes au moins un champ dans lequel on mémorise des données uniques relatives à l'identité de l'utilisateur et que l'on vérifie dans la carte que lorsque l'utilisateur met en service une nouvelle carte, ledit champ de la nouvelle carte est le même que celui de l'ancienne carte.

Selon un mode de réalisation particulier, l'initialisation d'une carte consiste, après vérification de la possession par l'utilisateur d'une carte précédente et d'une nouvelle carte de même identité , à modifier de façon irréversible une donnée secrète de la nouvelle carte .

Selon un mode de réalisation particulier, lors du renouvellement d'une carte, on vérifie que la nouvelle carte n'est pas déjà initialisée.

Selon un mode de réalisation particulier, lors de la mise en service d'une nouvelle carte , l'utilisateur doit composer un numéro de code secret.

L'invention concerne également un dispositif de protection contre l'utilisation par des personnes non autorisées de cartes à microprocesseur dans un réseau de contrôle ou de distribution de biens ou de services, comprenant au moins un centre de gestion ou un émetteur et au moins un terminal et des cartes à microprocesseur , caractérisé par le fait que
le terminal comporte des moyens permettant de mémoriser l'identité de l'utilisateur contenue dans un champ donné d'une première carte à microprocesseur utilisée dans le terminal et des moyens pour envoyer vers une seconde carte ladite identité,
ladite seconde carte comportant des moyens de comparaison de ladite identité reçue et d'une seconde identité mémorisée dans la dite seconde carte, et des moyens pour n'autoriser l'utilisation de la seconde carte qu'en cas d'égalité des deux identités.

Selon un mode de réalisation particulier, ledit terminal comporte des moyens commandés par une carte pour envoyer à ladite carte une tension d'écriture d'une information d'initialisation de cette carte dans un champ de la mémoire de cette carte .

Selon un mode de réalisation particulier, ledit dispositif est mis en oeuvre dans un système de télévision à péage.

La présente invention sera mieux comprise à la lecture de la description détaillée d'un mode de réalisation, pris comme exemple non limitatif et illustré par le dessin annexé sur lequel :
- la figure 1 est un bloc-diagramme simplifié d'un réseau conforme à l'invention, et
- la figure 2 est un diagramme de champ d'identification d'une carte à microprocesseur utilisée dans le réseau de la figure 1.

L'invention est décrite ci-dessous en référence à un réseau de télévision à péage, mais il est bien entendu qu'elle n'est pas limitée à une telle application, et qu'elle peut être mise en oeuvre dans tout réseau tel qu'un réseau de surveillance de biens et/ou de personnes ou un réseau de distribution de biens ou de services (réseau de distributeurs de billets de banque ou de spectacles, d'essence, de caisses enregistreuses de magasins ...). Un tel réseau comporte au moins un centre de gestion (ou serveur) ou un émetteur, et au moins un terminal approprié pouvant être proche ou distant du centre de gestion ou de l'émetteur, ce terminal comportant des moyens pouvant coopérer avec des cartes à microprocesseur.

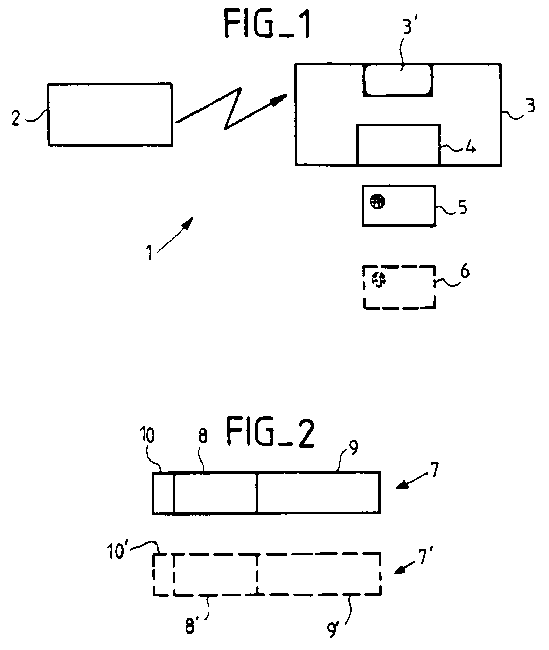

Le réseau 1 de télévision à péage de la figure 1 comporte un émetteur 2 et plusieurs récepteurs. Pour simplifier le dessin, un seul récepteur, référencé 3, a été représenté.

Ce récepteur 3 comporte un dispositif d'affichage 3′, qui peut être l'écran de ce récepteur. On n'a représenté dans le récepteur 3 que le seul dispositif nécessaire à l'exposé de l'invention, à savoir un lecteur 4 de cartes à microprocesseur (connues sous l'appellation de "smart card"). Ces cartes peuvent comporter, en plus de leurs circuits habituels, des jonctions fusibles ("jetons") qui représentent un crédit d'émissions, et qui sont grillées au fur et à mesure de l'utilisation de carte.

On a représenté en figure 1 une première carte 5 (en traits pleins) qui représente la carte dont la période de validité vient de s'achever, et une deuxième carte 6 (en traits interrompus) qui représente la nouvelle carte correspondant à la période de validité suivante.

Les cartes 5,6 comportent de façon habituelle, dans leur section de mémoire inhibée en lecture et en écriture, plusieurs champs de données secrètes. Ces données secrètes sont par exemple le numéro d'identification de la carte, le numéro de compte en banque de l'utilisateur, son crédit permis, un algorithme de décryptage...

Une de ces sections est représentée en figure 2, et référencée 7 pour la carte 5 et 7′ pour la carte 6. Cette section 7 (7′) est réservée à des données d'identification de la carte. Cette section 7 (7′) comporte deux champs 8,9 (pour la carte 5) et 8′,9′ (pour la carte 6). Le champ 8 (8′) comprend des données représentant des paramètres de validité (période de validité...) ou de personnalisation de l'abonnement pour lequel est émise la carte (genre d'émission, durée,...). Le champ 9,9′ contient un code d'identification de la carte et/ou du porteur.

En outre, la section 7,7′ contient un champ 10,10′ qui contient, dans le présent exemple, un seul bit. Ce champ 10,10′ n'est pas nécessairement contigu aux champs 8,9 ou 8′, 9′. Le bit du champ 10,10 est initialement un zéro. L'émetteur 2 vérifie que lorsqu'une nouvelle carte 6 est introduite dans le lecteur 4 au début d'une nouvelle période de validité, le bit du champ 10′ est bien un zéro. Si tel est le cas, l'émetteur 2 demande à l'utilisateur (affichage en 3′) d'introduire dans le lecteur 4 l'ancienne carte 5 pour avoir connaissance de son champ 9 et le mémoriser, puis demande à l'utilisateur de réintroduire dans le lecteur 4 la carte 6, et envoie à la carte 6 le champ 9. Si la carte 6 constate qu'il y a identité entre ces deux champs, la carte 6 autorise le décodeur du lecteur 4 à commander l'inscription d'un "1" dans 10′ et peut alors fonctionner normalement, c'est-à-dire qu'elle délivre le mot de contrôle au récepteur 3 pour lui permettre de désembrouiller les programmes embrouillés, pendant toute la durée de validité de la carte 6. Sinon, le lecteur commande l'affichage en 3′ d'un message de carte non valable, et la carte ne peut pas envoyer le mot de contrôle et peut être inhibée de façon définitive. Ainsi, selon la présente invention l'identité encryptée de l'ancienne carte 5 est provisoirement mémorisée dans le lecteur 4 (où elle est accessible de l'extérieur, mais du fait qu'elle est encryptée selon le concept de connaissance nulle "zéro knowledge", on ne peut pas retrouver cette identité), puis envoyée à la nouvelle carte 6. L'identité de la nouvelle carte ne peut être transférée vers le lecteur 4 que si cette carte a été validée, donc reconnue bonne.

On notera que si l'utilisateur effectue le changement de carte en cours de fonctionnement du récepteur 3, celui-ci garde en mémoire la valeur du champ 9 de la carte 5, et lorsque l'utilisateur enlève la carte 5 pour la remplacer par la carte 6, cette carte 6 est initialisée (inscription d'un "1" dans le champ 10′) automatiquement si elle est valide, c'est-à-dire si le contenu de son champ 9′ est' identique au contenu du champ 9 de la carte 5.

Selon une variante, on peut prévoir un champ supplémentaire dans la section 7,7′ comportant un numéro de code connu du seul utilisateur légitime qu'il doit composer avant l'initialisation d'une nouvelle carte.

Ainsi, selon la présente invention, l'autorisation de mise en service d'une carte est indépendante de l'obtention du mot de contrôle, dans le cas d'un réseau de télévision à péage.

## Revendications

1. Procédé de protection contre l'utilisation par des personnes non autorisées de cartes à microprocesseur dans un réseau de contrôle ou de distribution de biens ou de services comportant au moins un centre de gestion (2) ou un émetteur et au moins un terminal (3) caractérisé en ce qu'il consiste
à attribuer une identité (9, 9') à chaque utilisateur et à la mémoriser dans les cartes (5, 6) qui lui sont délivrées,
à vérifier, lors du renouvellement d'une carte (5), que la nouvelle carte (6) contient la même identité (9') que la carte précédente, et
à n'autoriser l'utilisation de la nouvelle carte que si elle contient la même identité que la carte précédente.

2. Procédé selon la revendication 1, caractérisé par le fait que l'on réserve dans les cartes au moins un champ (9, 9') dans lequel on mémorise des données uniques relatives à l'identité de l'utilisateur et que l'on vérifie dans la carte que lorsque l'utilisateur met en service une nouvelle carte (6), ledit champ (9') de la nouvelle carte est le même que celui de l'ancienne carte.

3. Procédé selon la revendication 1 ou 2, caractérisé par le fait que l'initialisation d'une carte (6) consiste, après vérification de la possession par l'utilisateur d'une carte précédente (5) et d'une nouvelle carte de même identité (9, 9'), à modifier de façon irréversible une donnée secrète (10') de la nouvelle carte (6).

4. Procédé selon la revendication 3, caractérisé par le fait que lors du renouvellement d'une carte, on vérifie que la nouvelle carte n'est pas déjà initialisée.

5. Procédé selon l'une des revendications précédentes, caractérisé par le fait que lors de la mise en service d'une nouvelle carte (6), l'utilisateur doit composer un numéro de code secret.

6. Dispositif de protection contre l'utilisation par des personnes non autorisées de cartes à microprocesseur (5, 6) dans un réseau de contrôle ou de distribution de biens ou de services, comprenant au moins un centre de gestion (2) ou un émetteur et au moins un terminal (3) et des cartes à microprocesseur (5, 6), caractérisé par le fait que
le terminal (3) comporte des moyens permettant de mémoriser l'identité de l'utilisateur contenue dans un champ donné (9) d'une première carte à microprocesseur (5) utilisée dans le terminal (3) et des moyens pour envoyer vers une seconde carte (6) ladite identité,
ladite seconde carte comportant des moyens de comparaison de ladite identité reçue et d'une seconde identité mémorisée dans ladite seconde carte, et des moyens pour n'autoriser l'utilisation de la seconde carte (6) qu'en cas d'égalité des deux identités.

7. Dispositif selon la revendication 6, caractérisé en ce que ledit terminal comporte des moyens commandés par une carte (6) pour envoyer à ladite carte (6) une tension d'écriture d'une information d'initialisation de cette carte dans un champ (10') de la mémoire de cette carte (6).

8. Dispositif selon l'une des revendications 6 ou 7, caractérisé en ce qu'il est mis en oeuvre dans un système de télévision à péage.

9. Dispositif selon l'une des revendications 6 à 8, caractérisé en ce qu'il met en oeuvre le procédé selon l'une des revendications 1 à 5.

## Patentansprüche

1. Verfahren zum Schutz gegen den Gebrauch von Mikroprozessor-Karten durch unbefugte Personen in einem Netz zur Kontrolle oder Verteilung von Waren oder Dienstleistungen, das wenigstens ein Lenkungszentrum (2) oder einen Sender und wenigstens eine Endeinrichtung (3) umfaßt, dadurch gekennzeichnet, daß es darin besteht,
jedem Benutzer eine Kennung (9, 9') zuzuweisen und sie in den ihm ausgehändigten Karten (5, 6) zu speichern,
bei der Erneuerung einer Karte (5) zu überprüfen, ob die neue Karte (6) die gleiche Kennung (9') wie die vorhergehende Karte enthält, und
den Gebrauch der neuen Karte nur dann zu gestatten, wenn sie die gleiche Kennung wie die vorhergehende Karte enthält.

2. Verfahren nach Anspruch 1, durch die Tatsache gekennzeichnet, daß man in den Karten wenigstens ein Feld (9, 9') reserviert, in dem man die Identität des Benutzers betreffende einmalige Daten speichert, und daß man anhand der Karte überprüft, ob, wenn der Benutzer eine neue Karte (6) in Betrieb nimmt, das besagte Feld (9') der neuen Karte das gleiche ist wie das der alten Karte.

3. Verfahren nach Anspruch 1 oder 2, durch die Tatsache gekennzeichnet, daß die Initialisierung einer Karte (6) nach der Überprüfung dessen, daß der Benutzer im Besitz einer vorhergehenden Karte (5) und einer neuen Karte mit gleicher Kennung (9, 9') ist, darin besteht, ein geheimes Datenelement (10') der neuen Karte (6) auf irreversible Weise zu ändern.

4. Verfahren nach Anspruch 3, durch die Tatsache gekennzeichnet, daß man bei der Erneuerung einer Karte überprüft, ob die neue Karte nicht bereits initialisiert wurde.

5. Verfahren nach einem der vorhergehenden Ansprüche, durch die Tatsache gekennzeichnet, daß der Benutzer bei der Inbetriebnahme einer neuen Karte (6) eine geheime Codenummer eingeben muß.

6. Vorrichtung zum Schutz gegen den Gebrauch von Mikroprozessor-Karten (5, 6) durch unbefugte Personen in einem Netz zur Kontrolle oder Verteilung von Waren oder Dienstleistungen, das wenigstens ein Lenkungszentrum (2) oder einen Sender und wenigstens eine Endeinrichtung (3) und Mikroprozessor-Karten (5, 6) umfaßt, durch die Tatsache gekennzeichnet, daß
die Endeinrichtung (3) Mittel umfaßt, die es ermöglichen, die in einem gegebenen Feld (9) einer ersten in der Endeinrichtung (3) verwendeten Mikroprozessor-Karte (5) enthaltene Kennung des Benutzers zu speichern, und Mittel, um die besagte Kennung zu einer zweiten Karte (6) zu übermitteln,
die besagte zweite Karte Mittel zum Vergleich der besagten empfangenen Kennung und einer zweiten, in der besagten zweiten Karte gespeicherten Kennung umfaßt, und Mittel, um den Gebrauch der zweiten Karte (6) nur im Falle der Gleichheit der beiden Kennungen zu gestatten.

7. Vorrichtung nach Anspruch 6, dadurch gekennzeichnet, daß die besagte Endeinrichtung durch eine Karte (6) gesteuerte Mittel umfaßt, um zu der besagten Karte (6) einer Spannung zum Einschreiben einer Information zur Initialisierung dieser Karte in ein Feld (10') des Speichers dieser Karte (6) zu übertragen.

8. Vorrichtung nach einem der Ansprüche 6 oder 7, dadurch gekennzeichnet, daß sie in einem Pay-TV-System eingesetzt wird.

9. Vorrichtung nach einem der Ansprüche 6 bis 8, dadurch gekennzeichnet, daß sie zur Durchführung des Verfahrens nach einem der Ansprüche 1 bis 5 verwendet wird.

## Claims

1. Method of protection against the use by unauthorized persons of microprocessor cards in a network for monitoring or dispensing goods or services including at least one management centre (2) or a transmitter and at least one terminal (3) characterized in that it consists
in allocating an identity (9, 9') to each user and in storing it in the cards (5, 6) issued thereto,
in checking, when renewing a card (5), that the new card (6) contains the same identity (9') as the previous card, and
in authorizing the use of the new card only if it contains the same identity as the previous card.

2. Method according to Claim 1, characterized in that at least one field (9,9') in which unique data relating to the identity of the user are stored is reserved in the cards and in that a check is carried out in the card as to whether, when the user puts a new card (6) into service, the said field (9') of the new card is the same as that of the old card.

3. Method according to Claim 1 or 2, characterized in that the initialization of a card (6) consists, after checking the holding by the user of a previous card (5) and of a new card with the same identity (9, 9'), in irreversibly modifying a secret data item (10') of the new card (6).

4. Method according to Claim 3, characterized in that when renewing a card, a check is carried out that the new card is not already initialized.

5. Method according to one of the preceding Claims, characterized in that when putting a new card (6) into service, the user must key in a secret code number.

6. Device for protection against the use by unauthorized persons of microprocessor cards (5, 6) in a network for monitoring or dispensing goods or services including at least one management centre (2) or a transmitter and at least one terminal (3) and microprocessor cards (5, 6), characterized in that
the terminal (3) includes means making it possible to store the user's identity contained in a given field (9) of a first microprocessor card (5) used in the terminal (3) and means for sending the said identity to a second card (6),
the said second card including means for comparing the said received identity and a second identity stored in the said second card, and means for authorizing the use of the second card (6) only in the event of equality of the two identities.

7. Device according to Claim 6, characterized in that the said terminal includes means controlled by a card (6) for sending to the said card (6) a voltage for writing an information item for initializing this card into a field (10') of the memory of this card (6).

8. Device according to either of Claims 6 or 7, characterized in that it is applied in a pay television system.

9. Device according to one of Claims 6 to 8, characterized in that it applies the method according to one of Claims 1 to 5.
